(19) Europäisches Patentamt

European Patent Office

Office européen des brevets

(11) **EP 1 567 760 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: 03753333.8

(22) Anmeldetag: **29.09.2003**

(51) Int Cl.:
*F02D 41/40* (2006.01)    *F02D 41/00* (2006.01)
*F02D 35/02* (2006.01)

(86) Internationale Anmeldenummer:
**PCT/DE2003/003244**

(87) Internationale Veröffentlichungsnummer:
**WO 2004/051067 (17.06.2004 Gazette 2004/25)**

(54) **VERFAHREN ZUM STEUERN EINER MIT KRAFTSTOFFDIREKTEINSPRITZUNG ARBEITENDEN BRENNKRAFTMASCHINE**

METHOD FOR CONTROLLING AN INTERNAL COMBUSTION ENGINE OPERATING WITH DIRECT FUEL INJECTION

PROCEDE POUR COMMANDER UN MOTEUR A COMBUSTION INTERNE A INJECTION DIRECTE DE CARBURANT

(84) Benannte Vertragsstaaten:
**DE FR GB IT**

(30) Priorität: **03.12.2002 DE 10256474**

(43) Veröffentlichungstag der Anmeldung:
**31.08.2005 Patentblatt 2005/35**

(73) Patentinhaber: **SIEMENS AKTIENGESELLSCHAFT 80333 München (DE)**

(72) Erfinder:
• **BEER, Johannes 93051 Regensburg (DE)**
• **ZHANG, Hong 93105 Tegernheim (DE)**

(56) Entgegenhaltungen:
**EP-A- 0 539 921        EP-A- 1 052 391**
**WO-A-00/52317        DE-A- 10 065 266**

## Beschreibung

Die Erfindung betrifft ein Verfahren zum Steuern einer mit einer Aufladevorrichtung versehenen und mit Kraftstoffdirekteinspritzung arbeitenden Brennkraftmaschine.

Brennkraftmaschinen mit Direkteinspritzung (DI, direct injection) beinhalten ein großes Potential zur Reduktion des Kraftstoffverbrauches bei relativ geringem Schadstoffausstoß. Im Gegensatz zur Saugrohreinspritzung wird bei einer Direkteinspritzung Kraftstoff mit hohem Druck direkt in die Verbrennungsräume der Brennkraftmaschine eingespritzt.

Hierzu sind Einspritzsysteme mit zentralem Druckspeicher (Common-Rail) bekannt. In solchen Common-Rail-Systemen wird mittels einer Hochdruckpumpe ein vom elektronischen Steuergerät der Brennkraftmaschine über Drucksensor und Druckregler geregelter Kraftstoffdruck in der Verteilerleiste (Common-Rail) aufgebaut, der weitgehend unabhängig von Drehzahl und Einspritzmenge zur Verfügung steht. Über einen elektrisch ansteuerbaren Injektor wird der Kraftstoff in den Brennraum eingespritzt. Dieser erhält seine Signale von dem Steuergerät. Durch die funktionelle Trennung von Druckerzeugung und Einspritzung kann der Einspritzdruck unabhängig vom aktuellen Betriebspunkt der Brennkraftmaschine weitgehend frei gewählt werden.

Die WO 00/52317 offenbart ein entsprechendes System bei dem eine einzuspritzende Kraftstoffmenge in zwei Teilmengen aufgeteilt wird, wobei eine erste Teilmenge in einen Ansaugtakt und eine zweite Teilmenge in einen Kompressionstakt eingespritzt wird. Das Mengenverhältnis zwischen den Teilmengen wird dabei abhängig von Motorbetriebsbedingungen und einer Klopfneigung eingestellt.

Es ist weiterhin bekannt, zur Leistungs- und Drehmomentsteigerung von Brennkraftmaschinen eine Aufladeeinrichtung vorzusehen, welche die Ladungsmenge durch Vorverdichtung vergrößert. Dabei fördert ein Lader die Frischluft in den Zylinder der Brennkraftmaschine. Bei der mechanischen Aufladung wird der Verdichter direkt von der Brennkraftmaschine angetrieben (z.B. Kompressoraufladung), während bei einer Abgasturboaufladung

eine mit dem Abgas der Brennkraftmaschine beaufschlagte Turbine (Abgasturbine) einen im Ansaugtrakt der Brennkraftmaschine liegenden Verdichter antreibt.

Moderne Brennkraftmaschinen weisen zur Senkung der Ladungswechselverluste variable Ventiltriebe mit ein- und mehrstufiger oder stufenloser Variabilität auf. Die variable Ventilsteuerung der Ein- und Auslassventile bietet die Möglichkeit die Ventilsteuerzeiten innerhalb der physikalischen Grenzen des vorhandenen Aktuatorprinzips (mechanisches System, hydraulisches Systemen, elektrisches Systemen, pneumatisches System oder eine Kombination der genannten Systeme) mehr oder weniger frei einzustellen. Dadurch können Verbrauchseinsparungen, niedrigere Rohemissionen und ein höheres Drehmoment erreicht werden.

Der Erfindung liegt die Aufgabe zugrunde, ein Verfahren anzugeben, mit dem die Betriebsweise einer mit Aufladung betriebenen und mit Kraftstoffdirekteinspritzung arbeitenden, einen variablen Ventiltrieb aufweisenden Brennkraftmaschine verbessert werden kann.

Diese Aufgabe wird durch ein Verfahren gelöst, wie es in Anspruch 1. definiert ist.

Vorteilhafte Weiterführungen des erfindungsgemäßen Verfahrens bilden den Gegenstand der Unteransprüche.

Bei einem mit homogenen Gemisch betriebenen Ottomotor mit Kraftstoffdirekteinspritzung, im folgenden vereinfacht als DI- Ottomotor bezeichnet, kann über eine Aufteilung der Gesamt-Kraftstoffeinspritzmenge,- jeweils eine Teileinspritzung in den Ansaug- und Kompressionstakt-, die erzielbare Leistung sowie der Kraftstoffverbrauch positiv beeinflusst werden.

Die in den Kompressionstakt abgesetzte zweite Einspritzmenge entzieht dem Gemisch Verdampfungswärme, was über eine Verminderung der Ladungstemperatur zum Zündzeitpunkt die maximale Verbrennungstemperatur und dadurch auch die Tendenz zur klopfenden Verbrennung vermindert. Auf diese Weise kann der Zündwinkel in Bereiche eines höheren motorischen Wirkungsgrades in "Richtung früh" verstellt werden.

Eine aufgeladene, mit homogenem Gemisch ($\lambda = 1$) betriebene DI-Brennkraftmaschine bietet zudem im volllastnahen Betrieb die Möglichkeit, Frischluft direkt in den Abgastrakt zu spülen. Voraussetzung dazu sind ein positives Druckgefälle zwischen Ein- und Auslassseite zum Zeitpunkt des Ladungswechsel OT (Oberer Totpunkt) sowie eine ausreichende Ventilüberschneidung zwischen Auslass- u. Einlassventil.

Durch die direkte Einspritzung von Kraftstoff in den Brennraum der Zylinder ist sichergestellt, dass der Beginn der Einspritzung nach dem Schließen des Auslassventils erfolgt. Es wird so nur Frischluft ohne Kraftstoff zur Abgasseite gespült.

Durch die zusätzliche Spülluft wird bei einem Abgasturbolader der Massenstrom durch die Turbine erhöht, wodurch sich das transiente Verhalten u. auch die erzielbare Maximalleistung erhöht. Durch die erhöhte Turbinenleistung fördert auch der mit der Turbine gekoppelte Verdichter eine höhere Luftmenge. Die Grenze stellt dabei das sogenannte Schluckverhalten der Brennkraftmaschine dar.

Das erfindungsgemäße Verfahren wird nachfolgend anhand eines Beispiels näher erläutert. Es zeigt:

Fig. 1 ein stark vereinfachtes Blockschaltbild einer aufgeladenen und mit Kraftstoffdirekteinspritzung arbeitenden Brennkraftmaschine, bei der das erfindungsgemäße Verfahren angewandt wird und

Fig. 2 ein Diagramm für den Verlauf des Druckes im Zylinder abhängig von dem Kurbelwellenwinkel.

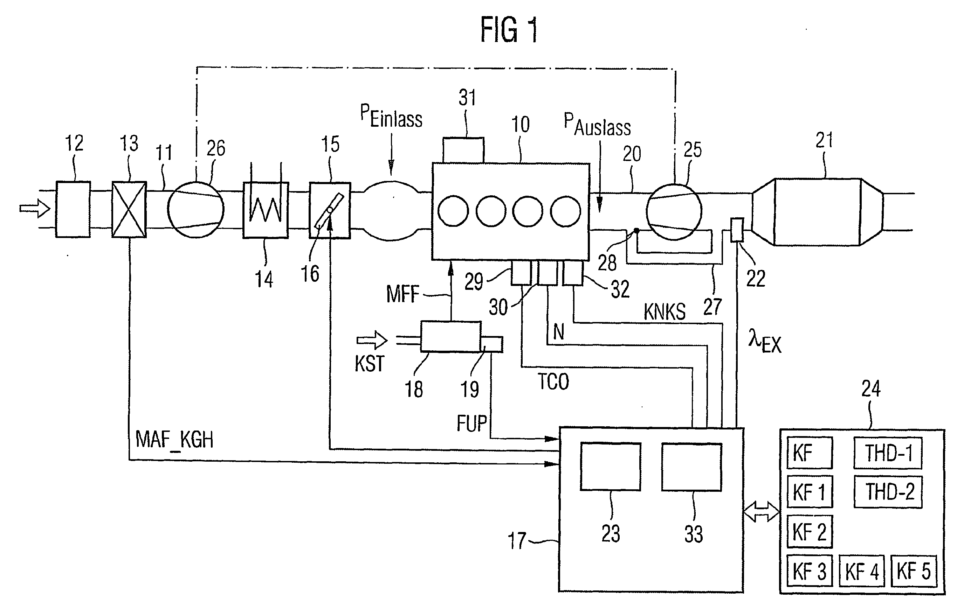

In Figur 1 ist in Form eines Blockschaltbildes eine aufgeladene Otto - Brennkraftmaschine 10 mit Kraftstoffdirekteinspritzung und einer ihr zugeordneten Abgasnachbehandlungsanlage gezeigt. Dabei sind nur diejenigen Komponenten dargestellt, die für das Verständnis der Erfindung notwendig sind. Insbesondere ist auf die Darstellung der Zündanlage, des Kraftstoffkreises und des Kühlkreislaufes verzichtet worden.

Über einen Ansaugkanal 11 erhält die Brennkraftmaschine 10 die zur Verbrennung notwendige Frischluft. Die zugeführte Frischluft strömt durch einen Luftfilter 12, einen Luftmassenmesser 13 und einen Ladeluftkühler 14 zu einem Drosselklappenblock 15. Der Drosselklappenblock 15 beinhaltet eine Drosselklappe 16 und einen nicht dargestellten Drosselklappensensor, der ein dem Öffnungswinkel der Drosselklappe 16 entsprechendes Signal abgibt. Bei der Drosselklappe 16 handelt es sich beispielsweise um ein elektromotorisch angesteuertes Drosselorgan (E-Gas), dessen Öffnungsquerschnitt neben der Betätigung durch den Fahrer (Fahrerwunsch) abhängig vom Betriebsbereich der Brennkraftmaschine über entsprechende Signale einer Steuerungseinrichtung 17 einstellbar ist. Der Luftmassenmesser 13 dient bei einer sogenannten luftmassengeführten Steuerung der Brennkraftmaschine als Lastsensor, dessen Ausgangssignal MAF_KGH zur weiteren Verarbeitung der Steuerungseinrichtung 17 zugeführt wird.

Die Brennkraftmaschine 10 weist eine Kraftstoffzumesseinrichtung 18 auf, der Kraftstoff KST unter hohem Druck zugeführt wird und die eine der Zylinderanzahl der Brennkraftmaschine entsprechende Anzahl von Einspritzventilen beinhaltet, welche über entsprechende Signale von Einspritzendstufen angesteuert werden, die vorzugsweise in der elektronischen Steuerungseinrichtung 17 der Brennkraftmaschine integriert sind. Über die Einspritzventile wird Kraftstoff direkt in die Zylinder der Brennkraftmaschine 10 eingespritzt. Die Einspritzventile werden dabei in vorteilhafter Weise aus einem Kraftstoffdruckspeicher (Common Rail) mit Kraftstoff versorgt. Die von einem Einspritzventil eingespritzte Kraftstoffmenge ist mit MFF bezeichnet. Ein Drucksensor 19 an der Kraftstoffzumesseinrichtung 18, erfasst den Kraftstoffdruck FUP, mit dem der Kraftstoff direkt in die Zylinder der Brennkraftmaschine eingespritzt wird.

Ausgangsseitig ist die Brennkraftmaschine 10 mit einem Abgaskanal 20 verbunden, in dem ein Abgaskatalysator 21 angeordnet ist. Dabei kann ein Dreiwege-Katalysator oder ein NOx-Speicherkatalysator oder eine Kombination der beiden vorgesehen sein. Die Sensorik für die Abgasnachbehandlung beinhaltet u.a. einen stromaufwärts des Abgaskatalysators 21 angeordneten Abgasmessaufnehmer in Form einer Lambdasonde 22.

Mit dem Signal $\lambda_{Ex}$ der Lambdasonde 22 wird das Gemisch entsprechend der Sollwertvorgaben geregelt. Diese Funktion übernimmt eine an sich bekannte Lambdaregelungseinrichtung 23, die vorzugsweise in die, den Betrieb der Brennkraftmaschine steuernde bzw. regelnde Steuerungseinrichtung 17 integriert ist. Solche elektronischen Steuerungseinrichtungen 17, die in der Regel einen oder mehrere Mikroprozessoren beinhalten und die neben der Kraftstoffeinspritzung und der Zündungsregelung noch eine Vielzahl weiterer Steuer- und Regelaufgaben übernehmen, sind an sich bekannt, so dass im folgenden nur auf den im Zusammenhang mit der Erfindung relevanten Aufbau und dessen Funktionsweise eingegangen wird. Insbesondere ist die Steuerungseinrichtung 17 mit einer Speichereinrichtung 24 verbunden, in der u.a. verschiedene Kennfelder und Schwellenwerte gespeichert sind, deren Bedeutung noch erläutert wird.

Zur Erhöhung der Zylinderfüllung und damit zur Leistungssteigerung der Brennkraftmaschine 10 ist eine Aufladevorrichtung in Form eines an sich bekannten Abgasturboladers vorgesehen, dessen Turbine 25 im Abgaskanal 20 angeordnet ist und über eine strichliert dargestellte, nicht näherbezeichnete Welle mit einem Verdichter 26 im Ansaugkanal 11 in Wirkverbindung steht. Somit treiben die Abgase die Turbine 25 und diese wiederum den Verdichter 26 an. Der Verdichter übernimmt das Ansaugen und liefert der Brennkraftmaschine eine vorverdichtete Frischladung. Der stromabwärts des Verdichters 26 liegende Ladeluftkühler 14 führt die Verdichtungswärme über den Kühlmittelkreislauf der Brennkraftmaschine ab. Dadurch kann die Zylinderfüllung weiter verbessert werden. Parallel zu der Turbine 25 ist eine Umgehungsleitung (Bypassleitung) 27 vorgesehen, die über ein sogenanntes Wastegate 28 unterschiedlich weit geöffnet werden kann. Hierdurch wird ein unterschiedlich großer Teil des Massenstroms aus der Brennkraftmaschine an der Turbine 25 vorbeigeleitet, so dass der Verdichter 26 des Abgasturboladers unterschiedlich stark angetrieben wird.

Ein Temperatursensor 29 erfasst ein der Temperatur der Brennkraftmaschine entsprechendes Signal, in der Regel die Kühlmitteltemperatur TCO. Ein Drehzahlsensor 30 erfasst die Drehzahl N der Brennkraftmaschine. Beide Signale werden der Steuerungseinrichtung 17 zur weiteren Verarbeitung zugeführt.

Ein Klopfsensor 32 erfasst die charakteristischen Klopfschwingung in dem Verbrennungsraum und gibt ein entsprechendes Signal KNKS an eine Klopfregelungseinrichtung 33 ab, die vorzugsweise in die Steuerungseinrichtung 17 integriert ist. Dabei kann eine der Zylinderzahl der Brennkraftmaschine 10 entsprechende Anzahl von Klopfsensoren oder nur ein einziger Klopfsensor vorgesehen sein.

Ferner weist die Brennkraftmaschine 10 eine Einrichtung 31 auf, mit deren Hilfe die Ventilüberschneidung der Einlassventile und der Auslassventile eingestellt und geändert werden kann. Solche variable Ventilsteuerungen können mit mechanischen Systemen, hydraulischen Systemen, elektrischen Systemen, pneumatischen Systemen oder durch eine Kombination der genannten Systeme realisiert werden. Dabei kann zwischen sosogenannten vollvariablen (stufenlosen) Ventiltrieben und Systemen mit in Stufen einstellbaren Ventiltrieben unterschieden werden.

Die zur Verbrennung nötige Kraftstoffeinspritzmenge MFF wird in herkömmlicher Weise aus einem Lastparameter, nämlich der angesaugten Luftmassse MAF_KGH und der Drehzahl N berechnet und mehreren Korrekturen (Temperatureinfluss, Lambdaregler, usw.) unterworfen.

Die gesamte, so ermittelte Kraftstoffeinspritzmenge MFF wird in zwei Einspritzvorgänge aufgeteilt. Eine erste Kraftstoffmenge MFF_1 wird in den Ansaugtakt abgesetzt, wohingegen eine zweite Kraftstoffmenge MFF_2 in den Kompressionstakt eingebracht wird. Es gilt: MFF = MFF_1 + MFF_2.

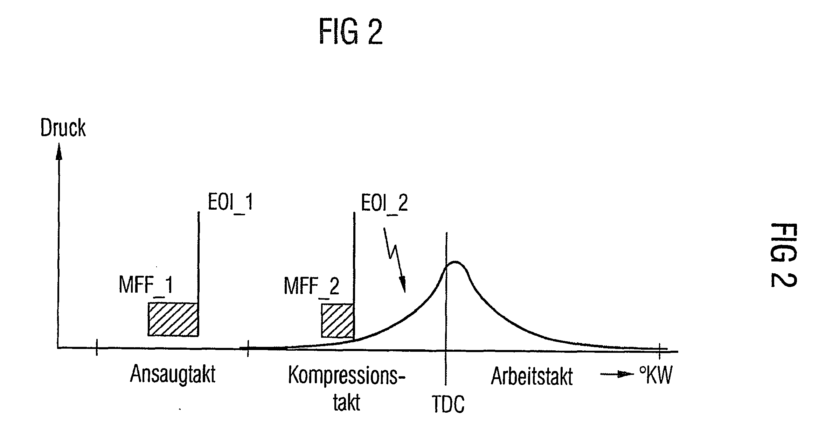

Dieser Vorgang ist für einen ausgewählten Zylinder in der Figur 2 dargestellt. Das Diagramm zeigt den Druckverlauf in eiem Zylinder einer 4-Takt-Otto-Brennkraftmaschine in Abhängigkeit des Kurbelwellenwinkels in °KW. Auf der Abszisse ist zusätzlich der Ansaugtakt, der Kompressionstakt und der Arbeitstakt eingetragen. Der Ausschiebetakt ist weggelassen. Mit den Bezugszeichen EOI_1 ist das Ende der Einspritzung in den Ansaugtakt, mit dem Bezugszeichen EOI_2 das Ende der Einspritzung in den Kompressionstakt bezeichnet. Der obere Totpunkt ist mit TDC (Top Dead Center) bezeichnet.

Die erste Kraftstoffeinspritzmenge MFF_1 sorgt bei entsprechend gewähltem Einspritzende EOI_1 für eine Kraftstoffverdampfung während Frischluft in den Zylinder strömt. Die zur Kraftstoffverdampfung erforderliche Wärme wird der einströmenden Luft entzogen, wodurch über eine Steigerung der Ladungsdichte der Liefergrad erhöht wird. Wird die gesamte Kraftstoffmenge MFF mit der ersten Einspritzung abgesetzt, so ergibt sich der höchste Liefergrad.

Die während des Kompressionstaktes eingebrachte Kraftstoffmenge MFF_2 entzieht bei entsprechend angepasstem Einspritzende EOI_2 dem sich in der Kompressionsphase befindlichen Luft-Kraftstoffgemisch Wärme durch Verdampfung. Es vermindert sich die Ladungstemperatur zum Zündzeitpunkt und dadurch auch die maximale Verbrennungstemperatur. Über eine Reduktion der maximalen Verbrennungstemperatur nimmt die Klopfneigung ab und es kann ein Zündwinkel für eine günstigere Verbrennungsschwerpunktlage (früher Zündzeitpunkt) eingestellt werden. Eine Steigerung der Kraftstoffmenge MFF_2, bis zu den durch Gemischaufbereitungszeiten vorgegebenen Grenzen, erhöht den Effekt der internen Ladungskühlung. Bei der Einspritzung in den Kompressionstakt stehen nur relativ kurze Gemischaufbereitungszeiten zur Verfügung. Wird hier zuviel Kraftstoff eingespritzt, so ist der Verbrennungswirkungsgrad schlecht, da der Kraftstoff nicht mehr vollständig verbrennen kann und es treten hohe CO- Emissionen und Rauchbildung auf. Die Grenzwerte hierfür werden betriebspunktabhängig durch Versuche ermittelt und in entsprechenden Kennfeldern abgelegt.

Das Aufteilungsverhältnis zwischen MFF_1 und MFF_2 kann so eingestellt werden, das sich Vorteile aus beiden Effekten nutzen lassen und so eine Optimierung von Maximalleistung und Verbrauch resultieren.

Im volllastnahen Betrieb einer aufgeladenen Brennkraftmaschine bewirkt die positive Druckdifferenz zwischen Einlass- und Auslassseite (Peinlass > Pauslass)- bei entsprechender Ventilüberschneidung-, dass Frischluft zur Abgasseite gespült wird. Die Spülluftmasse erhöht den Durchsatz durch die Brennkraftmaschine ohne an der Verbrennung teilzunehmen. Unter Spülen wird dabei der Effekt verstanden, dass Frischluft ohne an der Verbrennung im Zylinder teilzunehmen, durch die Brennkraftmaschine durchgeschoben wird. Es treten insbesondere folgende Vorteile für das Betriebsverhalten der Brennkraftmaschine auf:

Bei $\lambda_{Abgas}$ = 1 (Homogenbetrieb der Brennkraftmaschine) findet bei Spülluft eine Verbrennung im Zylinder mit $\lambda_{Zylinder}$ < 1 statt. Durch die Verbrennung im Fetten wird die Klopfneigung reduziert.

Durch Spülen wird der Restgasanteil im Brennraum und somit die Klopfneigung vermindert. Die Minimierung des Restgasanteils ist an der Volllast von entscheidender Bedeutung um eine maximale Zylinderfüllung zu erreichen und diese Füllung auch effektiv, d.h. mit günstiger Verbrennungsschwerpunktlage umzusetzen.

Die zusätzliche Spülluftmenge erhöht den Massenstrom durch die Turbine, wodurch bei niedrigen Drehzahlen der Brennkraftmaschine sowohl das Ansprechverhalten (Vermeidung des sogenannten Turbolochs), als auch die erreichbare Volllast gesteigert werden können.

Das Verhältnis der im Zylinder verbleibenden Luftmasse zur gesamten, während eines Arbeitsspieles angesaugten Luftmasse wird als trapping efficiency TE bezeichnet:

$$TE = \frac{Luftmasse \; \text{Zylinder}}{Gesamte \; \text{angesaugte Luftmasse}} = \frac{M_{Cyl}}{M_{Cyl} + M_{Scav}} \qquad (1)$$

Die gesamte angesaugte Luftmasse setzt sich zusammen aus der Luftmasse $M_{Cyl}$, die im Zylinder verbleibt und der Spülluftmasse $M_{Scav}$, also derjenigen Luftmasse, die durch den Zylinder gespült wird. Aus dem Zusammenhang (1) folgt, dass TE ≤ 1 ist. Je größer die Spülluftmasse $M_{Scav}$ ist, desto kleiner ist der Wert für TE. D.h. der Luftmassenmesser 13 (Fig. 1) misst die gesamte Luftmasse, die insgesamt angesaugt wird, die sich dann aber aufteilt über die Trapping Efficiency TE in eine Luftmasse, die an der Verbrennung teilnimmt und in eine Luftmasse, die durch die Brennkraftmaschine durchgespült wird.

Das im Abgas mittels der Lambdasonde 22 gemessene Lambda $\lambda_{Ex}$ stimmt, aufgrund der nicht an der Verbrennung teilnehmenden Spülluftmasse $M_{Scav}$, nicht mit dem Verbrennungslambda $\lambda_{Cyl}$ überein. Es gilt folgender Zusammenhang:

$$TE \cdot \lambda_{Ex} = \lambda_{Zyl} \qquad (2)$$

Im Teillast und volllastnahen Betrieb wird das verbrauchs- und leistungsoptimale Aufteilungsverhältnis der Einspritzmengen MFF_1 zu MFF_2 sowie deren jeweiligen Werte für die Einspritzendezeitpunkte EOI_1 und EOI_2 über Kennfelder KF1, KF2 bestimmt:

$$MFF\_1 = MFF * KF(MAF\_KGH, N)$$
$$MFF\_2 = MFF - MFF\_1$$
$$EOI\_1 = EOI\_1(MAF\_KGH, N, FUP) \qquad (3)$$
$$EOI\_2 = EOI\_2(MFF\_2, N, TCO, FUP)$$

Die während des Ansaugtaktes einzuspritzende Kraftstoffmenge MFF_1 wird durch Multiplikation der gesamten Kraftstoffmenge MFF mit einem Aufteilungsfaktor erhalten, der in Abhängigkeit von dem Wert der vom Luftmassenmesser 13 erfassten Luftmasse MAF_KGH und der Drehzahl N der Brennkraftmaschine aus einem Kennfeld KF ausgelesen wird. Die während des Kompressionstaktes einzuspritzende Kraftstoffmenge MFF_2 wird durch Differenzbildung aus den Werten für MFF und MFF_1 erhalten. Eine typische Aufteilung zwischen den einzelnen Kraftstoffmengen MFF_1 und MFF_2 besteht darin, dass in den Ansaugtakt 80% und in den Kompressionstakt 20% der gesamten Kraftstoffmenge MFF eingespritzt wird.

Der Wert für den Einspritzendezeitpunkt EOI_1 wird in Abhängigkeit von dem Wert MAF__KGH, der Drehzahl N der Brennkraftmaschine und dem Kraftstoffdruck FUP aus einem Kennfeld KF1 ausgelesen.

Der Wert für den Einspritzendezeitpunkt EOI_2 wird in Abhängigkeit dem Wert MFF_2, der Drehzahl N der Brennkraftmaschine, der Kühlmitteltemperatur TCO der Brennkraftmaschine und dem Kraftstoffdruck FUP aus einem Kennfeld KF2 ausgelesen. Dies kann ein dreidimensionales Kennfeld sein, oder eine Kombination mehrerer, einzelner Kennfelder.

Wird im volllastnahen Betrieb der Brennkraftmaschine (Drosselklappe voll offen) der Luftdurchsatz erfindungsgemäß mittels Spülen erhöht, so werden die Einspritzmengen-Sollwerte MFF_1 u. MFF_2 gemäß der eingestellten Trapping Efficiency TE vorgegeben.

Unter dem Begriff "volllastnaher Bereich" wird der Bereich verstanden, der zwischen der Volllast bei Saugbetrieb, also der max. Druck, der bei einem reinen Saugmotor ohne Aufladung erreicht werden kann (Saugrohrdruck gleich Umgebungsdruck, 1000 hpascal) und maximaler Volllast, also der Druck, den man mittels der Aufladung erreichen kann (z.B. 2000 hpascal), liegt.

Die während des Ansaugtaktes einzuspritzende Kraftstoffmenge MFF_1 wird dabei so bemessen, dass sich ein stöchiometrisches Verbrennungslambda $\lambda_{Cyl}$ ergibt. Die Menge des während des Kompressionstaktes einzuspritzende Kraftstoffmenge MFF_2 ergibt sich aus der Forderung eines stöchiometischen Abgaslambdas $\lambda_{Ex}$.

$$MFF\_1 = MFF * TE$$
$$MFF\_2 = MFF - MFF\_1$$
$$EOI\_1 = EOI\_1(MAF\_KGH, N, FUP) \qquad (4)$$
$$EOI\_2 = EOI\_2(MFF\_2, N, TCO, FUP)$$

Die während des Ansaugtaktes einzuspritzende Kraftstoffmenge MFF_1 wird durch Multiplikation der gesamten Kraftstoffmenge MFF mit dem Wert für die Trapping Efficiency TE erhalten. Die während des Kompressionstaktes einzuspritzende Kraftstoffmenge MFF_2 wird durch Differenzbildung aus den Werten für MFF und MFF_1 erhalten.

Die Werte für die Einspritzendezeitpunkte EOI_1 und EOI_2 werden analog wie oben bereits anhand der Gleichungen (3) beschrieben aus weiteren Kennfeldern K4, K5, erhalten.

Während des Betriebes der Brennkraftmaschine kann sogenannte Klopfen auftreten, d.h. unkontrollierte Verbrennungen z.B. an heißen Stellen des Brennraumes. Durch klopfende Verbrennung verursachte Verbrennungsdruckschwankungen werden in der Regel durch am Kurbelgehäuse montierte Körperschallsensoren detektiert. Nach entsprechender Signalaufbereitung resultiert das sogenannte Klopfsignal KNKS, welches das Klopfgeräusch eines Zylinders während eines Arbeitstaktes charakterisiert. Ausgehend von dem Klopfsignal KNKS wird, bei klopffreier Verbrennung, ein zylinderindividueller gleitender Mittelwert über alle Arbeitstakte bestimmt. Dieser sogenannte Geräuschwert NL charakterisiert den Motorgeräuschpegel eines Zylinders bei nicht klopfender Verbrennung. Durch Vergleich des momentanen Geräuschwertes KNKS mit einer aus dem Geräuschwert NL errechneten Klopfschwelle THD lässt sich erkennen, wann in einem Zylinder klopfende Verbrennung auftritt.

Die bekannten Anti-Klopfregelungsverfahren korrigieren in Abhängigkeit der Überschreitung der Klopfschwelle THD durch das Klopfsignal KNKS den Zündwinkel des betroffenen Zylinders in "Richtung spät", womit die Klopftendenz vermindert wird. Tritt nach einer Zündwinkelkorrektur am klopfenden Zylinder kein erneutes Klopfereignis auf, wird der Zündwinkeleingriff über einen Integrator auf Null zurückgefahren.

Nachteil dieser bekannten Verfahren ist eine Verlagerung des Verbrennungsschwerpunktes über den Zündwinkeleingriff in "Richtung Spät", woraus negative Auswirkungen auf den Kraftstoffverbrauch und die Abgastemperatur resultieren.

Gemäß einem Aspekt der Erfindung wird die Klopftendenz über eine entsprechende zylinderindividuelle Aufteilung der Einspritzmengen $MFF\_1_{Cyl\_x}$ und $MFF\_2_{Cyl\_x}$ vermindert. Ausgehend von den oben beschriebenen Einspritzsollwerten wird bei beginnender klopfender Verbrennung die Kraftstoffmenge $MFF\_2_{Cyl\_x}$, die während des Kompressionstaktes eingespritzt wird unter entsprechender Verminderung der Kraftstoffmenge $MFF\_1_{Cyl\_x}$, die in den Ansaugtakt eingespritzt wird, erhöht.

Die in den Kompressionstakt abgesetzte erhöhte zweite Einspritzung $MFF\_2_{Cyl\_x}$ führt durch die Verdampfung des Kraftstoffs im Brennraum zu einer zusätzlichen inneren Ladungskühlung. Dieser Effekt senkt über die verminderte maximale Verbrennungstemperatur die Neigung zur klopfenden Verbrennung. Der Zündwinkel muss nicht nach spät verschoben werden. Verbrauch und Abgastemperatur werden nicht negativ beeinflusst.

Übersteigt das Klopfsignal KNKS eines Zylinders Cyl x die Klopfschwelle THD_1 so wird die zylinderindividuelle Kraftstoffmenge $MFF\_1_{Cyl\_x}$ über einen Wert $MFF\_DEC\_1_{Cyl\_x}$ vermindert und die zylinderindividuelle Kraftstoffmenge $MFF\_2_{Cyl\_x}$ erhöht. Wurden nach Überschreiten der Klopfschwelle THD_1 die einzuspritzenden Kraftstoffmengen angepasst und wird kein erneutes Klopfereignis erkannt, so wird der Eingriff auf das Einspritzverhältnis über einen Integrator zurückgefahren, $MFF\_DEC\_1_{Cyl\_x}$ wird also wieder auf 1 inkrementiert.

$$MFF\_DEC_{Cyl\_x} = KF\_3(MAF\_KGH, N, KI)$$
$$MFF\_1_{Cyl\_x} = MFF\_1 \cdot MFF\_DEC_{Cyl\_x} \qquad\qquad (5)$$
$$MFF\_2_{Cyl\_x} = MFF - MFF\_1_{Cyl\_x}$$

Der Faktor $MFF\_DEC\_1_{Cyl\_x}$, mit dem die zylinderindividuelle Kraftstoffmenge $MFF\_1_{Cyl\_x}$ verringert wird, ist abhängig von der Luftmasse MAF_KGH, der Drehzahl N der Brennkraftmaschine und der Klopfintensität KI, definiert als Differenz zwischen dem Klopfsignal KNKS und der Klopfschwelle THD_1 in einem Kennfeld KF3 abgelegt.

Die zylinderindividuelle Kraftstoffmenge $MFF\_1_{Cyl\_x}$ ergibt sich dann aus der Multiplikation des Wertes für die während des Ansaugtaktes einzuspritzenden Kraftstoffmenge MFF_1 mit dem aus dem Kennfeld ausgelesenen Faktor für die Verringerung. Die zylinderindividuelle Kraftstoffmenge $MFF\_2_{Cyl\_x}$ wird durch Differenzbildung aus den Werten für MFF und $MFF\_1_{Cyl\_x}$ erhalten.

Ist nun das Klopfereignis so stark, dass eine Korrektur über das Einspritzverhältnis nicht ausreicht, wird ein zusätzlicher Eingriff über den Zündwinkel erforderlich. Dieser Fall tritt ein, wenn das Klopfsignal KNKS eine weitere Klopfschwelle THD_2 überschreitet, wobei THD_2 > THD_1 appliziert wird. Der zusätzliche Zündwinkeleingriff erfolgt, wie oben bei der Beschreibung des zündwinkelbasierten Anti-Klopfregelungsverfahren dargestellt.

Die beiden Schwellenwerte THD_1, THD_2 werden experimentell für die Brennkraftmaschine ermittelt und sind in der Speichereinrichtung 24 abgelegt.

Das erfindungsgemäße Verfahren wurde anhand einer Brennkraftmaschine erläutert, das als Aufladeeinrichtung einen Abgasturbolader aufweist. Das Verfahren ist aber unabhängig von der Art der Aufladung und ist mit jeder anderen Aufladevorrichtung wie Kompressoren, elektrische Verdichter oder eine Kombination der genannten Vorrichtungen ausführbar. Sie muss lediglich geeignet sein, auf der Saugseite einen Druck zu erzeugen, der größer ist als der Druck auf der Abgasseite, so dass ein Spülen möglich ist.

**Patentansprüche**

1. Verfahren zum Steuern einer Brennkraftmaschine (10), wobei

   - die den Brennräumen der Brennkraftmaschine (10) zugeführte Luft mittels einer Aufladevorrichtung (25, 26) vorverdichtet wird,
   - mittels einer variablen Nockenwellenverstellung die ventilüberschneidung der Gaswechselventile der Brennkraftmaschine eingestellt wird,
   - die zu einem homogenen Betrieb der Brennkraftmaschine (10) benötigte Kraftstoffeinspritzmenge (MFF) ermittelt und direkt in die Brennräume der Brennkraftmaschine (10) eingespritzt wird,
   - die Kraftstoffeinspritzmenge (MFF) in zwei Teilmengen (MFF_1, MFF_2) aufgeteilt wird,
   - eine erste Teilmenge (MFF_1) in den Ansaugtakt und eine zweite Teilmenge (MFF_2) in den Kompressionstakt eingespritzt wird,
   - das Aufteilungsverhältnis zwischen den beiden Teilmengen (MFF_1, MFF_2) abhängig von dem Lastbereich der Brennkraftmaschine (10) festgelegt wird, **dadurch gekennzeichnet, dass**
   - im volllastnahen Betrieb der Brennkraftmaschine (10) die Ventilüberschneidung derart eingestellt wird, dass Frischluft zur Abgasseite der Brennkraftmaschine gespült wird und das Aufteilungsverhältnis der beiden Teilmengen (MFF_1, MFF_2) über das Verhältnis (TE) der im Zylinder der Brennkraftmaschine (10) verbleibenden Luftmasse (Mcyl) zur gesamten, während eines Arbeitsspiels angesaugten Luftmasse ($M_{cyl} + M_{Scav}$) festgelegt wird.

2. Verfahren nach Anspruch 1, **dadurch gekennzeichnet, dass** die in den Ansaugtakt einzuspritzende Kraftstoffmenge (MFF_1) durch Multiplikation der gesamten Kraftstoffmenge mit dem Verhältnis (TE) der im Zylinder der Brennkraftmaschine (10) Arbeitsspiels angesaugten Luftmasse ($M_{cyl} + M_{Scav}$) erhalten wird.

3. Verfahren nach Anspruch 1, **dadurch gekennzeichnet, dass** die in den Kompressionstakt einzuspritzende Kraftstoffmenge (MFF_2) durch Differenzbildung aus den Werten für die gesamte Kraftstoffmenge (MFF) und der in den Ansaugtakt einzuspritzenden Kraftstoffmenge (MFF_1) erhalten wird.

4. Verfahren nach Anspruch 1, **dadurch gekennzeichnet, dass** ein Wert für einen Einspritzendezeitpunkt (EOI_1) in Abhängigkeit von der Luftmasse (MAF KGH), der Drehzahl (N) und dem Kraftstoffdruck (FUP) festgelegt wird.

5. Verfahren nach Anspruch 1, **dadurch gekennzeichnet, dass** bei Auftreten von klopfender Verbrennung in einem Zylinder der Brennkraftmaschine (10) das Aufteilungsverhältnis zwischen den beiden Teilmengen (MFF_1, MFF_2) zylinderindividuell geändert wird.

6. Verfahren nach Anspruch 5, **dadurch gekennzeichnet, dass** die Kraftstoffmenge ($MFF\_2_{Cyl\_x}$), die in den Kompressionstakt eingespritzt wird, erhöht wird und die Kraftstoffmenge ($MFF\_1_{Cyl\_x}$) die in den Ansaugtakt eingespritzt wird, vermindert wird.

7. Verfahren nach Anspruch 1, **dadurch gekennzeichnet, dass** die Luft mittels eines Abgasturboladers vorverdichtet wird.

8. Verfahren nach Anspruch 1, **dadurch gekennzeichnet, dass** die Luft mittels eines Kompressors vorverdichtet wird, der von der Brennkraftmaschine unmittelbar oder mittelbar angetrieben wird.

9. Verfahren nach Anspruch 1, **dadurch gekennzeichnet, dass** die Luft mittels eines elektrisch angetriebenen Verdichters vorverdichtet wird.

10. Verfahren nach Anspruch 1, **dadurch gekennzeichnet, dass** die Verstellung der Nockenwelle stufenlos erfolgt.

11. Verfahren nach Anspruch 1, **dadurch gekennzeichnet, dass** die Verstellung der Nockenwelle in Stufen erfolgt.

**Claims**

1. A method for controlling an internal combustion engine (10), wherein

   - the air fed to the combustion chambers of the internal combustion engine (10) is precompressed by means of a boosting device (25, 26),
   - the valve overlap of the gas exchange valves of the internal combustion engine is set by means of a variable camshaft displacement,
   - the quantity of fuel (MFF) requiring to be injected for homogeneous operation of the internal combustion engine (10) is determined and injected directly into the combustion chambers of the internal combustion engine (10),
   - the quantity of fuel to be injected (MFF) is divided into two partial quantities (MFF_1, MFF_2),
   - a first partial quantity (MFF_1) is injected into the intake stroke and a second partial quantity (MFF_2) is injected into the compression stroke,
   - the ratio with which the two partial quantities (MFF_1, MFF_2) are divided is determined as a function of the load range of the internal combustion engine (10),

   **characterized in that**

   - when the internal combustion engine (10) is operating close to full load the valve overlap is set in such a way that fresh air will be flushed toward the exhaust gas side of the internal combustion engine and the ratio with which the two partial quantities (MFF_1, MFF_2) are divided is determined via the ratio (TE) of the mass of air ($M_{Cyl}$) remaining in the cylinder of the internal combustion engine (10) to the total mass of air ($M_{Cyl} + M_{Scav}$) taken in during a working cycle.

2. The method as claimed in claim 1, **characterized in that** the quantity of fuel (MFF_1) to be injected into the intake stroke is obtained through multiplying the total quantity of fuel by the ratio (TE) of the total air mass drawn into the cylinder of the internal combustion engine (10) during a working cycle ($M_{cyl} + M_{Scav}$).

3. The method as claimed in claim 1, **characterized in that** the quantity of fuel (MFF_2) to be injected into the compression stroke is obtained through forming the difference between the values for the total quantity of fuel (MFF) and the quantity of fuel (MFF_1) to be injected into the intake stroke.

4. The method as claimed in claim 1, **characterized in that** the value for the end-of-injection instant (EOI_1) is determined as a function of the mass of air (MAF_KGH), the engine speed (N) and the fuel pressure (FUP)

5. The method as claimed in claim 1, **characterized in that** when knocking combustion occurs in a cylinder of the internal combustion engine (10) the ratio with which the two partial quantities (MFF_1, MFF_2) are divided will be changed for the individual cylinder.

6. The method as claimed in claim 5, **characterized in that** the quantity of fuel ($MFF\_2_{Cyl\_x}$) injected into the compression stroke will be increased and the quantity of fuel ($MFF\_1_{Cyl\_x}$) injected into the intake stroke will be reduced.

7. The method as claimed in claim 1, **characterized in that** the air is precompressed by means of an exhaust gas turbocharger.

8. The method as claimed in claim 1, **characterized in that** the air is precompressed by means of a compressor driven directly or indirectly by the internal combustion engine.

9. The method as claimed in claim 1, **characterized in that** the air is precompressed by means of an electrically driven compressor.

10. The method as claimed in claim 1, **characterized in that** the camshaft is displaced continuously.

11. The method as claimed in claim 1, **characterized in that** the camshaft is displaced in stages.

**Revendications**

1. Procédé de commande d'un moteur à combustion interne (10), dans lequel

   - l'air envoyé aux chambres de combustion du moteur à combustion interne (10) est suralimenté à l'aide d'un dispositif de suralimentation (25, 26),
   - au moyen d'un réglage d'arbre à came variable, on règle le chevauchement des soupapes d'échange de gaz du moteur à combustion interne,
   - la quantité de carburant injectée (MFF) nécessaire pour un fonctionnement homogène du moteur à combustion interne (10) est déterminée et est injectée directement dans les chambres de combustion du moteur à combustion interne (10),
   - la quantité de carburant injectée (MFF) est divisée en deux quantités partielles (MFF_1, MFF_2),
   - une première quantité partielle (MFF_1) est injectée dans la course d'admission et une deuxième quantité partielle (MFF_2) est injectée dans la course de compression,
   - le rapport de répartition entre les deux quantités partielles (MFF_1, MFF_2) est fixé en fonction du régime de charge du moteur à combustion interne (10)

   **caractérisé en ce que**

   - dans un fonctionnement du moteur à combustion interne (10) proche de la pleine charge, le chevauchement des soupapes est réglé de telle façon que l'air frais est balayé vers le côté échappement du moteur à combustion interne et le rapport de répartition des deux quantités partielles (MFF_1, MFF_2) est fixé par le rapport (TE) de la masse d'air ($M_{cyl}$) restante dans le cylindre du moteur à combustion interne (10) sur la masse d'air totale aspirée pendant un cycle de fonctionnement ($M_{cyl} + M_{Scav}$).

2. Procédé selon la revendication 1, **caractérisé en ce que** la quantité de carburant (MFF_1) à injecter dans la course d'admission est obtenue par la multiplication de la quantité de carburant totale avec le rapport (TE) de la masse d'air aspirée dans un cycle de fonctionnement ($M_{cyl} + M_{scav}$) dans le cylindre du moteur à combustion interne (10).

3. Procédé selon la revendication 1, **caractérisé en ce que** la quantité de carburant à injecter dans la course de compression (MFF_2) est obtenue par la différence des valeurs : quantité de carburant totale (MFF) et quantité de carburant à injecter dans une course d'admission (MFF_1).

4. Procédé selon la revendication 1, **caractérisé en ce qu'**une valeur pour l'instant de fin d'injection (EOI_1) est fixée en fonction de la masse d'air (MAF_KGH), du nombre de tours (N) et de la pression de carburant (FUP).

5. Procédé selon la revendication 1, **caractérisé en ce que** lors de l'apparition d'une combustion avec cliquetis dans un cylindre du moteur à combustion interne (10), le rapport de répartition entre les deux quantités partielles (MFF_1, MFF_2) est modifié individuellement par cylindre.

6. Procédé selon la revendication 5, **caractérisé en ce que** la quantité de carburant ($MFF\_2_{Cyl\_x}$) injectée dans la course de compression, est augmentée et la quantité de carburant ($MFF\_1_{Cyl\_x}$) injectée dans la course d'admission est diminuée.

7. Procédé selon la revendication 1, **caractérisé en ce que** l'air est suralimenté à l'aide d'un turbocompresseur à gaz d'échappement.

8. Procédé selon la revendication 1, **caractérisé en ce que** l'air est suralimenté au moyen d'un surcompresseur qui est entraîné directement ou indirectement par le moteur à combustion interne.

9. Procédé selon la revendication 1, **caractérisé en ce que** l'air est suralimenté au moyen d'un compresseur entraîné électriquement.

10. Procédé selon la revendication 1, **caractérisé en ce que** le réglage de l'arbre à cames a lieu de façon continue.

11. Procédé selon la revendication 1, **caractérisé en ce que** le réglage de l'arbre à cames a lieu par étapes.

FIG 1

FIG 2

EP 1 567 760 B1